# EUROPEAN PATENT APPLICATION

(11) **EP 4 424 789 A1**
(43) Date of publication of application: **04.09.2024**
(21) Application number: 24160856.1
(22) Date of filing: 01.03.2024
(51) Int. Cl.: C09J 11/06, C09J 133/10, C09J 163/00, C09J 175/04, C08K 5/01

(54) **STRUCTURAL ADHESIVES AND PREPARATION METHODS THEREOF**

(30) Priority: 03.03.2023 US 202363488333 P
(71) Applicant: Kraton Polymers Nederland B.V., 1322 CE Almere (NL)
(72) Inventor: NEUMANN, Brett, The Woodlands, Texas 77380 (US); HEEBNER, Gerald, The Woodlands, Texas 77380 (US)
(74) Representative: Henkel & Partner mbB

(57) **Abstract**

The disclosure relates to structural adhesive compositions containing decarboxylated rosin acid ("DCR"), methods of preparation, and applications thereof. The structural adhesive can be one-component or two-component compositions, selected from epoxy-based adhesives, acrylicbased adhesives, polyurethane-based adhesives, and silyl modified polymer-based adhesives. The DCR has a Kb value of 25-90, a density of 0.9 to 1.0 g/cm³ at 20°C, a viscosity of 15 to 60 cSt at 40°C, and an acid value of < 50 mg KOH/g. The structural adhesive composition after curing, has at least one of: a lap shear strength of at least 200 psi, a tensile elongation of at least 25%, and a tensile strength of at least 600 psi.

## Description

### FIELD

The disclosure relates to a structural adhesive containing decarboxylated rosin acid ("DCR"), methods of preparation, and applications thereof.

### BACKGROUND

Structural adhesives are typically thermosetting compositions that can be used to replace or augment conventional joining techniques such as screws, bolts, nails, staples, rivets, and metal fusion processes such as welding, brazing, and soldering. Structural adhesives, e.g., epoxy-based adhesives, acrylic-based adhesives, urethane-based adhesives and silyl modified polymer-based adhesives, are available in two forms, namely two-component systems or one-component systems that are cured. Structural adhesive may be cured by exposing it to heat and/or actinic radiation, or by exposure to ambient moisture, and generally exhibit good adhesion properties and a high bond strength to many surfaces.

Plasticizers have been used as additives in adhesive compositions for some time to modify physical properties of the adhesive and the polymer film formed by the dried adhesive. Plasticizers can facilitate the formation of an adhesive bond and prevent failure of the bond after aging. Plasticizers can also soften the polymer and add flexibility to the adhesive bond, lower the glass transition temperature (Tg) of the adhesive, and enhance film formation. Additionally, plasticizers may act as a fluid carrier for the polymeric component. In the past, petroleum-based plasticizers such as benzoates or blends of dibenzoates, adipates and phthalates have been used. Alternatively, typical acrylic structural adhesives, specifically methyl methacrylate (MMA) adhesives, do not use plasticizers, but use solid rubbers to increase flexibility / elongation.

There remains a need for bio-based based alternatives to petroleum-based plasticizers and solid rubbers in traditional structural adhesives.

### SUMMARY

In one aspect, the disclosure is related to a structural adhesive composition comprising: 10-99 wt.% of a polymer precursor selected from the group consisting of epoxy, acrylic, polyurethane, and silyl modified polymer, 1-25 wt.% of a decarboxylated rosin acid ("DCR"), and up to 89 wt.% of an optional component. The DCR has a Kb value of 25-90, according to ASTM D1133, a density of 0.9 to 1.0 g/cm3 at 20°C, a viscosity of 15 to 60 cSt at 40°C, measured according to ASTM D-445, and an acid value of < 50 mg KOH/g, as measured using ASTM D1240-14 (2018). The structural adhesive has a lap shear strength of at least 200 psi after curing.

In an aspect, the structural adhesive composition is supplied as a single part comprising, or consisting essentially of, a polymer precursor selected from the group of epoxy, acrylic, polyurethane, and silyl modified polymer; a decarboxylated rosin acid; an optional component; and a curing agent or catalyst depending on the polymer precursor used.

In an aspect, the structural adhesive composition is supplied as a two-part kit. The two-part kit comprises, consists essentially of, or consists of, a first part and a second part. The first part comprises, or consists essentially of, a polymer precursor selected from the group of epoxy, acrylic, polyurethane, and silyl modified polymer. The second part comprises, or consists essentially of, a curing agent or catalyst depending on the polymer precursor used. In embodiments, decarboxylated rosin acid is present in any of the first part, the second part, or both the first and second part.

### DESCRIPTION

The following terms will have the following meanings:
"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.
"At least one of [a group such as A, B, and C]" or "any of [a group such as A, B, and C]," or "selected from [A, B, and C]," means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C. In another example, at least one of A and B means A only, B only, as well as A and B.

A list of embodiments presented as "A, B, or C" is to be interpreted as including the embodiments, A only, B only, C only, "A or B," "A or C," "B or C," or "A, B, or C."

Double Bond Equivalent" or DBE refers to a degree of unsaturation or a number of double / triple bonds present in a compound / molecule / species.

Kinematic viscosity can be measured per ASTM D445.

Molecular weight (MW) of compounds or components / species in a compound can be determined by MS (mass spectroscopy), preferably in combination with a chromatographic separation method like GC (gas chromatography) or HPLC (high performance liquid chromatography). In embodiments, the MW is determined by GC-MS, using a column with a highly-substituted cyanopropyl phase (e.g. Supelco SP-2330, Restek rtx-2330, or Agilent HP-88) of the size 30m × 0.25mm × 0.20µm, with the following operating parameters: a temperature profile of 100°C for 5.0 min, heating with 5°C/min to 250°C and holding this temperature for 10.00 min; forming a solution with 10 mg of compound in 1 ml of a suitable solvent such as toluene, cyclohexane, etc.; injecting 1µl of the solution with a split ratio of 1:40 at 250°C; maintaining the flow at 1 ml/min throughout the analysis. Identification of the individual components is performed by QMS (quadrupole mass spectrometry) detector, with an ion source temperature of 200°C and a mass range of 35 - 500 amu.

"Solubility Parameter" or (δ) of a solvent or polymer, refers to the square root of the vaporization energy (ΔE) divided by its molar volume (V), as in the equation δ = (ΔE/V)^{1/2}. The more similar the solubility parameters of two substances, the higher will be the solubility between them and hence the expression "like dissolves like." Hansen established that the solubility parameter of a solvent or polymer is the result of the contribution of three types of interactions: dispersion forces (δD²), polar interactions (δP²), and hydrogen bonds (δH²) (Hansen, 2007; Hansen, 1967), with the total solubility (Hildebrand) parameter δ_{T} as the result of contribution of each of the three Hansen solubility parameters (HSP) according to: δ_{T} = (δ2_{D} + δ2_{P} + 62_{H})^{½}.

The disclosure relates to a structural adhesive composition comprising, consisting essentially of, or consisting of a biobased decarboxylated rosin acid (DCR), a polymer precursor, and optionally a curing agent or catalyst depending on the type of adhesive. The polymer precursor can be any of epoxy, acrylic, polyurethane, or silyl modified polymer. The adhesive composition can be a two-component (two-part) composition or one-component (one-part) composition.

Decarboxylated Rosin Acid (DCR): The structural adhesive comprises a biobased DCR. The DCR is a rosin-derived composition obtained by decarboxylating a rosin acid, or by dimerizing and decarboxylating a rosin acid and separating / removing the dimerized species. The DCR is in the form of a liquid, and can be any of a crude DCR, a distilled or purified DCR, or mixtures thereof. The DCR can be hydrogenated and/or functionalized. Crude DCR is DCR containing 5-25 wt.% of higher molecular weight (450-1500 Da) components, e.g., hydrocarbons, oligomers, polymers, impurities, or dimer / trimer of fatty acids. Distilled or purified DCR refers to crude DCR having heavy fractions removed to improve color, reduce sulfur, etc. Hydrogenated DCR refers to DCR that has undergone hydrogenation for the reduction of C=C double bonds and obtain hydrogenated compounds. Unless specified otherwise, DCR herein refers to both unhydrogenated DCR (crude, distilled or purified), or hydrogenated DCR.

DCR is produced by the decomposition of rosin acids at high temperatures, e.g., 220-300°C. Rosin acids are normally solid, having a softening point of, e.g., 65-85°C. The rosin acid can be fully decarboxylated forming DCR. The rosin acid can be partially decarboxylated, forming DCR, which is a mixture of molecules, some of which contain monocarboxylic acids having a general molecular formula, e.g., C₂₀H₃₀O₂.

In embodiments, the DCR comprises one or more C=C groups, 40 - 100 wt.% of tricyclic species having 18 - 20 carbon atoms, 0 - 30 wt.% of components with < 19 carbon atoms, and 40 - 100 wt.% of components with a molecular formula in the range from C₁₉H₂₀ to C₁₉H₃₄, based on the total weight of the DCR. In embodiments, sum of tricyclic species as aromatic and cycloaliphatic in the DCR is > 50 wt.%, or > 55 wt.%, or > 60 wt.%, or > 74 wt.%, or > 90 wt. %, or up to 100 wt.%, of total weight of the DCR. Aromatic DCR is defined as DCR species having a MW of 252-256, with MW of 254 as having a reactive double bond, and cycloaliphatic DCR is defined as DCR species having a MW of 260 or 262.

In embodiments, the DCR has a C19 (MW 248-262) content of > 50 wt.%, or > 60 wt.%, or > 70 wt.%, or > 80 wt.%. In embodiments, the amount of cycloaliphatic DCR (MW 260 and 262) is > 15 wt.%, or > 20 wt.%, or > 30 wt.%, or > 40 wt. %, or > 50 wt.%, or > 80 wt. %, based on the total weight of the DCR.

In embodiments, total amount of tricyclic species having reactive double bond (C=C group) is < 5 wt.%, < 3 wt.%, < 1 wt.%, or 0 wt.% of total weight of the DCR. Reactive C=C group is defined as DCR species having a MW of 254 or 258.

In embodiments, the DCR has C19 species with MWs of 254, 250, and 248 in an amount of < 5 wt.%, or < 3 wt.%, or < 1 wt.%, or < 0.5 wt.%, or 0 wt.%.

In embodiments, the DCR has a C13 species with MWs of 174 and 180 in an amount of 5-20 wt.%, or 5-15 wt.%, or > 5 wt.% or < 20 wt.%.

In embodiments after hydrogenation, the amount of tricyclic species having 18-20 carbon atoms in the hDCR goes up to at least 70 wt.%, or 75 - 100, or 75 - 95, or 80 - 100, or 80 - 95 wt.%, based on total weight of the hDCR .

In embodiments before hydrogenation, the unhydrogenated DCR contains C19 species with a MW of 262 in an amount of 5-20 wt.%, or 5-15 wt.%, or < 25 wt.%, or < 20 wt.%, or < 15 wt.%. After hydrogenation, the hDCR contains C19 species with a MW of 262 in an amount of 25-100 wt.%, or 25-90 wt.%, or 25-80 wt.%, or 40-75 wt.%, or 50-70 wt.%, or > 25 wt.%, or > 35 wt.%, or > 50 wt.%, or > 75 wt.%.

In embodiments before hydrogenation, the unhydrogenated DCR contains C19 species with a MW of 260 in an amount of 5-25 wt.%, or 10-20 wt.%, or > 5 wt.%, or > 10 wt.%, or > 15 wt.%, or < 20 wt.%. After hydrogenation, the hDCR contains C19 species with a MW of 260 in an amount of 0-5 wt.%, or 0-3 wt.%, or 0-1 wt.%, or < 5 wt.%, or < 2 wt.%, or 0 wt.%.

In embodiments before hydrogenation, the unhydrogenated DCR contains C19 species with a MW of 256 in an amount of 35-55 wt.%, or 40-50 wt.%, or > 37 wt.%, or > 40 wt.%, or > 45 wt.%. After hydrogenation the hDCR contains C19 species with a MW of 256 in an amount of 0-40 wt.%, or 5-35 wt.%, or 10-30 wt.%, or < 40 wt.%, or < 30 wt.%.

In embodiments before hydrogenation, the unhydrogenated DCR contains C19 species with a MW of 252 in an amount of 5 - 20 wt.%, or 5-15 wt.%, > 5 wt.%, or > 10 wt.%. After hydrogenation, the hDCR contains C19 species with a MW of 252 in an amount of 0-5 wt.%, or 0-3 wt.%, or < 5 wt.%, or < 3 wt.%, or < 1 wt.%, or 0 wt.%.

In embodiments before hydrogenation, the unhydrogenated DCR contains C13 species with a MW of 180 in an amount of 0-5 wt.%, or 0-3 wt.%, or < 5 wt.%, or < 2 wt.%, or < 1 wt.%, or 0 wt.%. After hydrogenation, the hDCR contains C13 species with a MW of 180 in an amount of 0-25 wt.%, or 5-20 wt.%, or 5-15 wt.%, or > 5 wt.%, or > 7 wt.%, or > 10 wt.%.

In embodiments before hydrogenation, the unhydrogenated DCR contains C13 species with a MW of 174 in an amount of 5-25 wt.%, 5-20 wt.%, or 5-15 wt.%, or > 5 wt.%, or > 10 wt.%, or < 20 wt.%. After hydrogenation, the hDCR contains C13 species with a MW of 174 in an amount of 0-5 wt.%, or 0-3 wt.%, or < 5 wt.%, of < 2 wt.%, or 0 wt.%.

The MW of the species in unhydrogenated DCR and hDCR as measured using the analytical methods previously specified (e.g., MS, MS /GC / HPLC, and GC-MS) can be identified by the following retention profile: MW of 174 g/mol, 7.0 - 8.5 minutes; MW of 180 g/mol, 2.5 - 4.0 minutes; MW of 248 g/mol, 32.5 - 34.5 minutes; MW of 250 g/mol, 26.0 - 31.0 minutes; MW of 252 g/mol, 24.5 - 31.0 minutes; MW of 254 g/mol, 16.5 - 25.0 minutes; MW of 256 g/mol, 16.5 - 25.0 minutes; MW of 260 g/mol, 11.0 - 16.0 minutes; and MW of 262 g/mol, 11.0 - 16.0 minutes. For components with overlapping retention time ranges, the mass spectrum of each peak is used to identify the MW of the component. Components with the same MW (isomers) are clustered and the total amount per isomer is reported.

In embodiments, the hDCR comprises at least 5 isomers, or 10 isomers, or 20 isomers, or 50 isomers, or 100 isomers of a species having a molecular formula of C₁₉H₃₄ and a MW of 262 g/mol.

In embodiments after hydrogenation, the hDCR comprises C=C double bonds in amounts of < 40%, or < 30%, or < 20%, or < 15%, or < 10%, or < 5%, or > 1%, or 1 - 40%, or 2 - 20%, or 1 - 10%.

In embodiments after hydrogenation, the hDCR comprises an average Double Bond Equivalent in an amount of 0.1 - 2, or 0.2 - 1.5, or 0.5 - 1.4, or 0.5 - 2, or < 2, or < 1.8, or < 1.5, or < 1.2, or > 0.1.

In embodiments, DCR is characterized as having a m/z (mass/charge) value in the range of 170 - 280, or 220 - 280, or 230 - 270, or 234 - 262, or 235 - 265, or > 230, or < 265, measured by GC-FID-MS.

In embodiments, DCR is characterized as having an oxygen content of < 5%, or < 3%, or < 2%, or < 0.9%, or < 0.5, or < 0.2%, or < 0.1%, or 0-5%, or 0-3%, or 0-2%, or 0-1%. The oxygen content (in %) can be calculated as oxygen to carbon ratio, or the sum of oxygen atoms present divided by sum of carbon atoms present, with the number of oxygen and carbon atoms being obtained from elemental analyses.

In embodiments, unhydrogenated DCR is characterized as having a lower acid value (carboxylic acid content) than the rosin acid feedstock for making the DCR. In embodiments, the DCR has an acid value of < 50, or < 45, or < 40, or < 35, or < 30, or < 25, or < 20, or < 15, or < 10, or < 7, or < 5, or 0.5-40, or 0.5-30, or 0.5-20, or 1-20, or 1-15, or 1-15, or 1-10 mg/KOH, as measured using ASTM D1240-14 (2018) or ASTM D465.

In embodiments, hDCR has an acid value of < 1, or < 0.8, or < 0.5, or < 0.2, or 0.01-1, or 0.1-0.8, or 0.01-0.5 mg KOH/g, as measured using ASTM D1240-14 (2018) or ASTM D465.

In embodiments, DCR has a density of 0.9-1.0, or 0.91-0.99, or 0.92-0.98, or 0.93-0.97, or 0.94-0.96, or > 0.9, or < 1.1 g/cm³.

In embodiments, DCR is characterized as having viscosities comparable to those of petrochemical base oils, due in part to its relatively high molecular weights, for example, a viscosity of 5-60, or 10-60, 15-60, or 5-55, or 10-50, or 10-45, or 15-40, or > 5, or > 10, or > 20, or > 25, or > 28, or < 45, or < 50, or < 60 cSt according to ASTM D-445, measured at 40°C.

In embodiments, unhydrogenated DCR has an aniline point of 3-40°C, or 5-40°C, or 5-30°C , or 5-25°C, or 2-20°C, or 5-20°C, or 5-15°C, or < 25°C, or < 20°C, or > 3°C , or > 5°C, or > 8°C, according to ASTM D611.

In embodiments, hDCR has an aniline point of 20-80°C, 30-70°C, 30-60°C, 40-50°C, or > 20°C, or > 30°C, or > 40°C, or < 70°C, according to ASTM D611.

In embodiments, unhydrogenated DCR has a pour point of -40 to +10°C, or -35 to +8°C, -30 to +5°C, or -30 to +0°C, or -30 to -5°C, or -28 to 0°C, or -28 to -5°C, or -28 to - 10°C, or > -40°C, or > -30°C, or > -28°C, or < +5°C, or < +10°C, according to ASTM D97.

In embodiments, hDCR has a pour point of -40 to -10°C, or -35 to -20°C, or -35 to -25°C, or < 0°C, or < -5°C, < -10°C, or > -40°C, or > -35°C, or according to ASTM D97.

In embodiments, unhydrogenated DCR has a flash point of 135-180°C or 135-175°C, or 135-165°C, or 135-160°C, or 140-175°C, or 140-160°C, or 140-158°C, or 140-155°C, or > 135°C, or > 140°C, or < 175°C, or < 165°C, or < 160°C, according to ASTM D92.

In embodiments, hDCR has a flash point of 95-140°C, or 100-135°C, or 95-135°C, or < 140°C, or < 135°C, or > 95°C, or > 100°C, according to ASTM D92.

In embodiments, DCR has a boiling point of 200-390°C, or 210-390°C, or 235-390°C, or 280-380°C, or 290-370°C, or 300-360°C, or > 290°C, or > 230°C, or > 210°C, or < 400°C, or < 370°C, measured according to ASTM D2887.

In embodiments, unhydrogenated DCR has a Gardner Color of 0-12.0, or 0.5-12.0, or 0.8-12.0, or 0.9-11, or 1.0-10.0, or 1.0-6.0, or 1.0-5, or > 0, or > 1.0, or > 1.2, or < 10.0, or < 7.0, or < 6.0, or <5.0, or < 2.4, or < 3.0, according to ASTM D6166.

In embodiments, hDCR has a Gardner Color of < 1, or < 0.8, or < 0.5, or < 0.2, or 0.1-1, or 0.15-0.8, or 0.1-0.5, according to ASTM D6166.

In embodiments, unhydrogenated DCR has a sulfur content of < 500 ppm (0.05 wt.%), or < 300 ppm (0.03 wt.%), or < 200 ppm (0.02 wt.%), or < 100 ppm (0.01 wt.%), or < 10 ppm (0.001 wt.%), or 20-700 ppm (0.002-0.7 wt.%), 30-500 ppm (0.003-0.5 wt.%), or 40-400 ppm (0.004-0.4 wt.%), or 40-300 ppm (0.004-0.3 wt.%), or 40-200 ppm (0.004-0.2 wt.%), based on total weight of the DCR, measured according to ASTM D5453.

In embodiments, hDCR has a sulfur content of 0.001-10 ppm, or 0.001-5 ppm, or < 10 ppm, or < 8 ppm, or < 5 ppm, or > 0.001 ppm, measured according to ASTM D5453.

In embodiments, DCR has a VOC of < 5, or < 4.75, or < 4.5, or < 4.25, or < 4.0, or < 3.75, or < 3.5, or < 3.25, or < 3.0, or < 2.75, or < 2.5, or < 2.25, or < 2.0, or < 1.5, or < 1.0, or < 0.5 wt.%, based on total weight of the DCR. The VOC of the DCR is measured according to methods: i) summing the percent by weight contribution from all VOCs present in the product at 0.01% or more, or ii) according to the EPA (Environmental Protection Agency) method 24 or equivalent.

In embodiments, DCR has a Kb (Kauri butanol) value of 25-90, or 30-85, or 35-80, or 40-75, or 45-70, or 50-65, or > 40, or > 50, or > 60, or > 70, or > 80, according to ASTM D1133.

In embodiments, unhydrogenated DCR has a viscosity index of > -200, or -200 to -50, or < 0, or < -50, measured according to ASTM D2270. In embodiments, hDCR has a viscosity index of < 25, or < 0, or -50 to 0, or > -50, measured according to ASTM D2270. The viscosity index is an arbitrary, unit-less measure of a fluid's change in viscosity relative to temperature change, for example, index of viscosity at 40°C and viscosity at 100°C.

In embodiments, DCR has a δD value of 14-18, or 14.2-17.8, or 14.5-17.5, or 15-17, or 15.2-16.5; a δP value of 3-6, or 3.2-5.5, or 3.4-5.2, or 3.5-5.0; and δH value of 7-10, or 7.5-9.5, or 8-9, or 8.2-8.8.

In embodiments, unhydrogenated DCR has a surface tension of 25-50, or 28-45, or 30-40 dynes/cm, according to ASTM D1331.

Epoxy-based Adhesive: In embodiments, the adhesive composition is epoxy-based, comprising at least one curable epoxy resin as the polymer precursor. The epoxy resin can be any of monomeric, dimeric, oligomeric or polymeric epoxy materials containing at least one epoxy functional group per molecule. Such resins can be aromatic or aliphatic, cyclic or acyclic, monofunctional or polyfunctional. Substituent groups of the epoxy resin can be any group not having a nucleophilic group or electrophilic group (such as an active hydrogen atom) which is reactive with an oxirane ring. Substituent groups can include halogens, ester groups, ethers, sulfonate groups, siloxane groups, nitro groups, amide groups, nitrile groups, and phosphate groups.

In embodiments, epoxides are of the glycidyl ether type. Suitable glycidyl ether epoxides include glycidyl ethers of bisphenol A and F, aliphatic diols, or cycloaliphatic diols; linear polymeric epoxides having terminal epoxy groups (e.g., a diglycidyl ether of polyoxyalkylene glycol); and aromatic glycidyl ethers (e.g., those prepared by reacting a dihydric phenol with an excess of epichlorohydrin). Examples of epoxies are disclosed in U.S. Pat. No. 6,486, 256 and WO 94/00,527, incorporated herein by reference.

In embodiments, the epoxy component comprises a mixture of two or more epoxy resins in order to modify and adapt the mechanical properties of the structural adhesive with respect to specific requirements. Types of epoxy resins that can be used include, for example, the reaction product of bisphenol A and epichlorohydrin, the reaction product of phenol and formaldehyde (novolac resin) and epichlorohydrin, peracid epoxies, glycidyl esters, glycidyl ethers, the reaction product of epichlorohydrin and p-amino phenol, the reaction product of epichlorohydrin and glyoxal tetraphenol, and others, as named in "Handbook of Epoxy Resins," McGraw-Hill, Inc., 1967, incorporated herein by reference.

In embodiments for epoxy-based adhesives, an amine curing agent is employed. The curing agent functions to cross-link the epoxy resin. In embodiments, amine curing agents include ethylene diamine, diethylene diamine, diethylene triamine, triethylene tetramine, propylene diamine, tetraethylene pentamine, hexaethylene heptamine, hexamethylene diamine, 2-methyl-1,5-pentamethylene-diamine, 4,7,10-trioxatridecan-1,13-diamine, aminoethylpiperazine, and combinations thereof. The amine curing agent can be a polyether amine having one or more amine moieties, including those polyether amines that can be derived from polypropylene oxide or polyethylene oxide.

In embodiments, the curing agents are characterized as "latent" curatives. A latent curative is one that does not operate to cure an epoxy resin until melted in the elevated temperatures of a curing process while in contact with the targeted epoxy resin. Examples of latent curatives include anhydrides, blocked amines (methyl ethyl ketoxime or phenyl glycidyl ether), dicyandiamide, imidazoles, and acid anhydrides (e.g., pyromellitic dianhydride or nadic methyl anhydride) and mixtures thereof.

Acrylic-based Adhesive: In embodiments, the adhesive composition is acrylic-based, comprising an acrylic precursor. The acrylic precursor can be a mixture of one or more acrylate or methacrylate monomers or oligomers.

Suitable acrylate or methacrylate monomers are tetraethyleneglycol, isodecyl, hydroxyethyl, and hydroxypropyl esters of acrylic acid and methacrylic acid; butyl, isodecyl, methyl, tetrahydrofurfuryl, isobornyl, and 2-ethylhexyl esters of acrylic and methacrylic acid; diacrylates, dimethacrylates, triacrylates, trimethacrylates, tetracrylates and tetramethacrylates of butyleneglycol, tetraethyleneglycol, polyethylene glycol, bisphenol A, ethoxylated bisphenol A, pentaerythritol; and mixtures thereof.

Suitable acrylated or methacrylated oligomers can be prepared from a wide range of materials provided they have adhesive properties appropriate to the desired end use and have acrylate or methacrylate functionality. In embodiments, acrylated or methacrylated oligomers are those having a polyurethane backbone capped with acrylate functionality, such as, for example, those formed by the reaction of a polyester polyol or poly(alkylene oxide) polyol with an excess of diisocyanate, and then further reacted with a hydroxyl containing acrylate or methacrylate, such as, hydroxyethyl acrylate.

In embodiments for acrylic-based adhesives, a free radical generator is used as a curing agent. A number of free radical generators can be included as curing agents. Free radical generators are known in the literature and described in "Free Radicals in Solution," C, Walling, J. Wiley & Sons, New York, 1957 and in "The Chemistry of Organic Film Formers," D.H. Solomon, J. Wiley & Sons, New York. 1967 page 135, incorporated herein by reference.

Examples of free radical generators include organic peroxides and hydroperoxides such as cumene hydroperoxide, benzoyl peroxide, diacyl peroxide, lauroyl peroxide, a perester such as P-butyl peroxybenzoate or tert-butyl peroxybenzoate, ketone hydroperoxide such as methyl ethyl ketone hydroperoxide, cyclohexanone peroxide, and mixtures thereof. The free radical generator can also be an organic transition metal salt, such as cobalt naphthenate, or a compound comprising labile chlorine, such as sulfonyl chloride.

The free radical generators can be multifunctional crosslinking monomers. Examples include 1,4-butanediol diacrylate, 1,6-hexanediol diacrylate, trimethylolpropane triacrylate, pentaerythritol triacrylate, 1,2-ethanediol diacrylate, trimethylolpropane tri(meth) acrylate, hexanediol dimethacrylate, trimethylolethane tri(meth) acrylate, pentaerythritol tetra(meth) acrylate, polyethylene glycol diacrylates, and epoxy-diacrylates such as bisphenol A dimethacrylate and ethoxylated bisphenol A dimethacrylate.

In embodiments, epoxy resins are included in the acrylic-based composition to improve properties, including strength, flexibility, durability, heat resistance, and adhesion to various substrates.

Polyurethane-based Adhesive: In embodiments, the adhesive composition is polyurethane-based, comprising a polyurethane precursor. The polyurethane polymer precursor is typically prepared by reacting polyisocyanate with polyol polymer.

The isocyanate is not particularly limited and can be selected from various conventionally known isocyanate compounds, and include unmodified isocyanates, modified polyisocyanates, and isocyanate prepolymers. Such organic polyisocyanates include aliphatic, cycloaliphatic, araliphatic, aromatic, and heterocyclic polyisocyanates of the type described, for example, by W. Siefken in Justus Liebigs Annalen der Chemie, 562, pages 75 to 136, incorporated herein by reference. Examples of polyisocyanate compounds suitable for use in the polymer precursor are toluene diisocyanate (TDI), diphenylmethane diisocyanate (MDI), hexamethylene diisocyanate (HDI), modified TDI, modified MDI, modified HDI, and the like. Examples of suitable aliphatic diisocyanates include hexamethylene diisocyanate, isophorone diisocyanate, cyclohexane-1,4 diisocyanate, 4,4'-dicyclohexylmethane diisocyanate, trimethyl-1,6 diisocyanatohexane and m-tetramethylxylene diisocyanate.

Examples of suitable polyols include but are not limited to, glycols, polyester polyols, polyether polyols, modified polyether polyols, polyester ether polyols, castor oil polyols, polyacrylate polyols, copolymers and combinations thereof. The polyols can be diols, or triols, or mixtures thereof.

In embodiments, for one-component polyurethane-based adhesives, the polyurethane-based adhesive comprises polyol polymer, and polyisocyanate pre-reacted with a blocking agent, such as methylethyl ketone oxime or dimethylol propionic acid, to block the isocyanate functionality. In the preparation of the polyurethane polymer precursor, the ratio of the hydroxyl groups of the alcohol component to the isocyanate groups of the polyfunctional isocyanates is important. In embodiments, the ratio of isocyanate group equivalents to hydroxyl group equivalents for the synthesis of the polyurethane precursor is from about 1.05:1.00 equivalents NCO/OH to about 10:1 equivalents NCO/OH, preferably from about 1.2:1.0 equivalents NCO/OH to about 3:1 equivalents NCO/OH, most preferably about 2:1 equivalents NCO/OH. The one-component polyurethane-based adhesive is then moisture and/or heat cured.

In embodiments, for a two-component polyurethane-based adhesive, the polymer precursor is two-component comprising polyol as the main agent and polyisocyanate component as the curing agent.

A catalyst can be added to the polyurethane-based adhesive to speed up cure time, including organometallic catalysts such as an organotin or tertiary amine. Organometallic and metallic salt catalysts used in polyurethane chemistry typically contain metals or metallic ions from Groups VIII I-B, II-B and IV-A of the Periodic Table, e.g., tin, lead, iron, and mercury. The catalyst can be added in an amount of from about 0% to about 3% by weight of the polyurethane polymer precursor, or 0.001% to 1.5%, or 0.01% to 1.5%.

Silyl Modified Polymer ("SMP")-based Adhesive: In embodiments, the adhesive composition is silyl modified polymer based, comprising at least one SMP as a polymer precursor. A SMP is any organic polymer that has been substituted with at least one silyl group. In some embodiments, a silyl modified polymer is a silyl terminated polymer. As used herein, "a silyl terminated polymer" is a silyl modified polymer where the substitution of the at least one silyl group is at an end of a chain of the polymer backbone.

A "silyl group" can have the general formula -SiₙR₂ₙ₊₂, where R is hydrogen, an organic group, or any combination thereof, and can also include any version of the aforementioned formula where at least one of the R sub-groups is substituted with an organic group. In some embodiments, the at least one silyl group is unsubstituted, such that all of the R sub-groups may be the same. In some embodiments, the at least one silyl group is substituted such that some of the R sub-groups may be the same while others may differ from each other. In some embodiments, the at least one silyl group is substituted such that all of the R sub-groups are different. In embodiments, the at least one silyl group is a trimethoxysilyl group, a triethoxysilyl group, a tris(2-propenyloxy)silyl group, a triacetoxysilyl group, a methyldimethoxysilyl group, methyldiethoxysilyl group, a dimethoxyethyl silyl group, a (chloromethyl)dimethoxysilyl group, chloromethyl)diethoxysilyl group, a (methoxymethyl)dimethoxysilyl group, a (methoxymethyl)diethoxysilyl group, a (N,N-diethylaminomethyl)dimethoxysilyl group, a (N,N-diethylaminomethyl)diethoxysilyl group, or combinations thereof.

In embodiments, the at least one silyl modified polymer may be characterized by a specific polymer backbone. For example, the at least one silyl modified polymer has a saturated hydrocarbon polymer backbone, a (meth)acrylic acid ester polymer backbone, or a polyoxyalkylene polymer backbone. In embodiments, the at least one silyl modified polymer is a plurality of silyl modified polymers and can be the same of different. SMPs are described in US Patent Nos. 11472988 and 9598619, US Publication No. 2023313005, and EP Publication No. EP3689996, all incorporated herein by reference.

In embodiments, a cross-linking catalyst or cross-linking promoting catalyst is used in the SMP-based adhesive. The catalyst may be any catalyst which has activity in relation to the cross-linking of the hydrolysable groups, such as the silyl groups of polymers. Organotin catalysts, for example, dibutyltindiacetylacetonate (DBTDAA), or dioctyltindiacetylacetonate (DOTCAA) or dibutyltindilaurate (DBTDL), dibutyltindiacetate, dibutyltin-dibutylate, or tinoctoate can be used in the SMP-based adhesive. Alternatively, orthotitanates and other organic titanates (titanium chelates) such as diisopropoxy-titaniumbis(ethylacetoacetate), dibutoxy-titanium-bis(ethylacetoacetate), titanium acetylacetonate or dibutoxy-titanium-bisacetylacetonate may also be used. The catalyst can be added in any amount from 0.1 and 1 wt.%, or 0.1 to 0.6 wt.%, or > 0.1 wt.%, or > 0.2 wt.%, or < 1 wt.%, or < 0.8 wt.%, or < 0.6 wt.%, or based on the total weight of the SMP-based adhesive.

Optional Components: In embodiments, the structural adhesive composition further comprises optional components. The optional components are selected from the group of adhesion promoters, elastomer tougheners, corrosion inhibitors, impact modifiers, reactive liquid monomers, rheology controlling agents, pigments, colorants, antioxidants, metal salts, anti-foaming agents, dispersants, surfactants, flame retardants, cure rate regulators, accelerators, fillers, and mixtures thereof.

Examples of fillers include various ground or precipitated chalks, quartz powder, alumina, non-platy clays, dolomite, carbon fibers, glass fibers, polymeric fibers, titanium dioxide, fused silica, carbon black, calcium oxide, calcium magnesium carbonates, barite, silicate-like fillers of the aluminum magnesium calcium silicate type, e.g., wollastonite and chlorite, and mixtures thereof.

The amount of optional components depends on the type of polymer precursor for use in the structural adhesive as specified below.

Composition of Structural Adhesive: The structural adhesive may be a one-component (kit) or two-component composition (kit). In one-component compositions, the DCR, the polymer precursor, e.g., epoxy, acrylic, polyurethane, or SMP, depending on the adhesive type optionally the curing agent or catalyst, and optional components are mixed together prior to being applied to a substrate and cured. In embodiments, the structural adhesive composition comprises 10-99 wt.%, or 20-99 wt.%, or 40-99 wt.%, or 50-99 wt.% or > 25 wt.%, or > 50 wt.% of a polymer precursor selected from the group consisting of epoxy, acrylic, polyurethane, and silyl modified polymer, 1-25 wt.%, or 1-25 wt.% or 1-20 wt.%, or 1-15 wt.% of a DCR, and up to 89 wt.%, < 80 wt.%, or < 70 wt.%, or 0-89 wt.% or 0-79 wt.%, or 1-59 wt.%, or 1-49 wt.% of an optional component. For two-component adhesive compositions, the DCR can be in part A and / or part B of the structural adhesive composition. Depending on the polymer precursor type, the following is a description of various structural adhesive formulations:

Epoxy-based adhesives: In embodiments for one-component epoxy-based adhesives, the DCR is present in an amount of 1-25 wt.%, or 5-20 wt.%, or 5-15 wt.%, or 5-10 wt.%, or < 25 wt.%, or < 20 wt.%, or < 15 wt.%, or < 10 wt.%, or > 1 wt.%, or > 3 wt.%; the epoxy polymer precursor is present in an amount of > 25 wt.%, or > 40 wt.%, or > 50 wt.%, or > 60 wt.%, or > 90 wt.%, or 20-98 wt.%, or 20-95 wt.%, or 20-90 wt.%, or 20-85 wt.%, or 50-98 wt.%; the curing agent is present in an amount of 1-15 wt.%, or < 20 wt.%, or < 15 wt.%, or < 10 wt.%, or > 1 wt.%, or > 2 wt.%; and the optional components are present in an amount of < 80 wt.%, or < 70 wt.%, or < 60 wt.%, or < 50 wt.%, or 0-80 wt.%, or 1-80 wt.%, 1-50 wt.%, or 1-30 wt.%, or based on the total weight of the epoxy-based adhesive composition.

In embodiments for two-component epoxy-based adhesives, the DCR can be added in either to the epoxy polymer precursor, or to the curing agent or to both. In embodiments, the DCR is added to the epoxy polymer precursor (part A), with part B comprising, or consisting essentially of, or consisting of the curing agent. In embodiments, part A comprises (based on the total weight of part A): epoxy polymer precursor in an amount of 20-99 wt.%, or 20-95 wt.%, or 30-95 wt.%, or 40-95 wt.% or 50-95 wt.%, < 99 wt.%, or < 95 wt.%, or < 90 wt.%, or > 40 wt.%, or > 50 wt.%, or > 60 wt.%; and DCR in an amount of 1-25 wt.%, or 5-20 wt.%, or 5-15 wt.%, or 5-10 wt.% or < 25 wt.%, or < 20 wt.%, or < 15 wt.%, or < 10 wt.%, or > 1 wt.%, or > 3 wt.%; and optional components are present in an amount of up to < 80 wt.%, or < 70 wt.%, or < 60 wt.%, or < 50 wt.%, or 0-80 wt.%, or 1-80 wt.%, 1-50 wt.%, or 1-30 wt.%, based on the total weight of part A. In embodiments, part B comprises (based on the total weight of part B): a curing agent in an amount of up to 100 wt.% (total weight of part B), or 10-100 wt.%, or 20-99 wt.%, or 25-95 wt.%, or 30-95 wt.%, or 40-95 wt.% or 50-90 wt.%, or < 99 wt.%, or < 95 wt.%, or < 90 wt.%, or > 20 wt.%, or > 40 wt.%, or > 50 wt.%, or > 60 wt.%, or > 65 wt.%; and optional components, e.g., catalysts, rheology additives, or curing accelerator, in an amount of < 50 wt.%, < 40 wt.%, or < 30 wt.%, or 0-50 wt.%, or 1-50 wt.%, 1-40 wt.%, or 1-30 wt.%, or 1-20 wt.%, based on the total weight of part B.

In embodiments, the DCR is added to the curing agent (part B), with part A comprising, or consisting essentially of, the epoxy polymer precursor. In embodiments, part A (based on the total weight of part A) comprises: the epoxy polymer precursor in an amount of up to 100 wt.%, 10-99 wt.%, or 20-95 wt.%, or 30-95 wt.%, or 40-95 wt.% or 50-95 wt.%, or < 95 wt.%, or < 90 wt.%, or > 40 wt.%, or > 50 wt.%, or > 60 wt.%; and optional components in an amount of < 90 wt.%, or < 80 wt.%, or < 70 wt.%, or < 60 wt.%, < 50 wt.%, < 40 wt.%, or < 30 wt.%, or 1-90 wt.%, or 1-75 wt.%, 1-50 wt.%, or 1-40 wt.%, or 1-30 wt.%. In embodiments, part B (based on the total weight of part B) comprises: DCR in an amount of 1-25 wt.%, or 5-20 wt.%, or 5-15 wt.%, or 5-10 wt.% or < 25 wt.%, or < 20 wt.%, or < 15 wt.%, or < 10 wt.%, or > 1 wt.%, or > 3 wt.%; curing agent in an amount of 20-99 wt.%, 25-99 wt.%, or 30-99 wt.%, or 40-99 wt.% or 50-99 wt.%, 75-99 wt.%, or < 100 wt.%, or < 99 wt.%, or < 95 wt.%, or < 90 wt.%, < 80 wt.%, or > 20 wt.%, or > 40 wt.%, or > 50 wt.%, or > 60 wt.%, or > 65 wt.%; and optional components, e.g., catalysts, rheology additives, or curing accelerator, in an amount of < 90 wt.% < 80 wt.%, or < 70 wt.%, or < 60 wt.%, or < 50 wt.%, or 0-90 wt.%, or 1-90 wt.%, 1-75 wt.%, or 1-50 wt.%, or 1-30 wt.%, based on the total weight of part B.

In embodiments where DCR is added in both part A and part B, the amount of DCR to be added in each part ranges from 1-25 wt.%, or 5-20 wt.%, or 5-15 wt.%, or < 25 wt.%, or < 20 wt.%, or < 15 wt.%, or < 10 wt.%, or > 1 wt.%, or > 3 wt.%, based on the formulations above.

In mixing parts A and B to form the epoxy-based adhesive, the amounts of part A and part B will depend upon the desired epoxy to amine hydrogen molar ratio and range from 0.5:1 to 4:1, or 0.5:1 to 3:1, or 0.5:1 to 1.5:1.

Acrylic-based adhesives: In embodiments, for one-component acrylic-based adhesives, the DCR is present in an amount of 1-25 wt.%, or 5-20 wt.%, or 5-15 wt.%, or 5-10 wt.% or < 25 wt.%, or < 20 wt.%, or < 15 wt.%, or < 10 wt.%, or > 1 wt.%, or > 3 wt.%; the acrylic polymer precursor is present in an amount of up to 20-99 wt.%, 25-99 wt.%, or 30-99 wt.%, or 40-99 wt.% or 50-99 wt.%, 20-75 wt.%, or < 100 wt.%, or < 99 wt.%, or < 95 wt.%, or < 90 wt.%, or > 20 wt.%, or > 40 wt.%, or > 50 wt.%, or > 60 wt.%, or > 65 wt.%; the curing agent is present in an amount of < 10 wt.%, or < 5 wt.%, or < 4 wt.%, or > 1 wt.%, or 1-10 wt.%, or 1-5 wt.%; and the optional components are present in an amount of < 80 wt.%, or < 70 wt.%, or < 60 wt.%, or < 50 wt.%, or 0-50 wt.%, or 1-50 wt.%, 1-40 wt.%, or 1-30 wt.%, based on the total weight of the acrylic-based adhesive composition.

In embodiments for two-component acrylic-based adhesives, the DCR can be added either the acrylic polymer precursor, or to the curing agent, or to both. In embodiments, the DCR is added to the acrylic polymer precursor (part A), with part B comprising the curing agent. In embodiments, part A comprises (based on the total weight of part A): the acrylic polymer precursor in an amount of 20-99 wt.%, or 25-99 wt.%, or 30-99 wt.%, or 40-99 wt.% or 50-99 wt.%, or < 100 wt.%, or < 99 wt.%, or < 95 wt.%, or < 90 wt.%, or > 20 wt.%, or > 40 wt.%, or > 50 wt.%, or > 60 wt.%, or > 65 wt.%; DCR in an amount of 1-25 wt.%, or 5-20 wt.%, or 5-15 wt.%, or 5-10 wt.% or < 25 wt.%, or < 20 wt.%, or < 15 wt.%, or < 10 wt.%, or > 1 wt.%, or > 3 wt.%; and optional components in an amount of < 80 wt.%, or < 70 wt.%, or < 60 wt.%, or < 50 wt.%, or 0-50 wt.%, or 1-45 wt.%, or 1-40 wt.%, or 1-30 wt.%, based on the total weight of part A. In embodiments, part B comprises (based on the total weight of part B): a curing agent in an amount of < 50 wt.%, or < 40 wt.%, or > 20 wt.%, or > 30 wt.%, or 20-50 wt.%; and optional components in an amount of < 80 wt.%, or < 70 wt.%, or < 60 wt.%, or < 50 wt.%, or 0-85 wt.%, or 1-85 wt.%, 1-75 wt.%, or 1-50 wt.%, or 1-30 wt.%, based on the total weight of part B. Part B can also contain epoxy, in an amount of < 85 wt.%, or < 70 wt.%, or < 50 wt.%, or 1-85 wt.%, or 1- 75 wt.%, or 1-50 wt.%, or 1-30 wt.%, based on the total weight of Part B.

In embodiments, the DCR is added to the curing agent (part B), with part A consisting essentially of the acrylic polymer precursor. In embodiments, part A (based on the total weight of part A) comprises: the acrylic polymer precursor in an amount of 10-100 wt.%, 10-99 wt.%, or 20-99 wt.%, 25-99 wt.%, or 30-99 wt.%, or 40-99 wt.% or 50-99 wt.%, or < 100 wt.%, or < 99 wt.%, or < 95 wt.%, or < 90 wt.%, or > 20 wt.%, or > 40 wt.%, or > 50 wt.%, or > 60 wt.%, or > 65 wt.%; and optional components in an amount of up to 90 wt.%, or < 80 wt.%, or < 70 wt.%, or < 60 wt.%, or < 50 wt.%, or 0-90 wt.%, or 1-90 wt.%, or 1-80 wt.%, or 1-70 wt.%, 1-60 wt.%, or 1-50 wt.%, or 1-30 wt.%, based on the total weight of part A. In embodiments, part B comprises (based on the total weight of part B): a curing agent in an amount of < 50 wt.%, or < 40 wt.%, or > 20 wt.%, or > 30 wt.%, or 20-50 wt.%; DCR in an amount of 1-25 wt.%, or 5-20 wt.%, or 5-15 wt.%, or 5-10 wt.% or < 25 wt.%, or < 20 wt.%, or < 15 wt.%, or < 10 wt.%, or > 1 wt.%, or > 3 wt.%; and optional components in an amount of < 80 wt.%, or < 70 wt.%, or < 60 wt.%, or < 50 wt.%, or 0-80 wt.%, or 1-80 wt.%, 1-75 wt.%, or 1-50 wt.%, or 1-30 wt.%, based on the total weight of part B. Part B can also contain epoxy, in an amount of < 85 wt.%, or < 70 wt.%, or < 50 wt.%, or 1-85 wt.%, or 1- 75 wt.%, or 1-50 wt.%, or 1-30 wt.%, based on the total weight of Part B.

In embodiments, where the DCR is added in both part A and part B, the amount of DCR to be added in each part ranges from 1-25 wt.%, or 5-20 wt.%, or 5-15 wt.%, or 5-10 wt.% or < 25 wt.%, or < 20 wt.%, or < 15 wt.%, or < 10 wt.%, or > 1 wt.%, or > 3 wt.%, based on the formulations above.

In mixing parts A and B to form the acrylic-based adhesive, the amounts of part A and part B range from 1:1 to 20:1, or 5:1 to 15:1, or 7:1 to 12:1.

Polyurethane-based adhesives: In embodiments, for one-component polyurethane-based adhesives, the DCR is present in an amount of 1-25 wt.%, or 5-20 wt.%, or 5-15 wt.%, or 5-10 wt.% or < 25 wt.%, or < 20 wt.%, or < 15 wt.%, or < 10 wt.%, or > 1 wt.%, or > 3 wt.%; the polyurethane polymer precursor (polyol, isocyanate and blocking agent) is present in an amount of 50-99 wt.%, 60-99 wt.%, 70-99 wt.%, or < 99 wt.%, or < 95 wt.%, or < 90 wt.%, or > 20 wt.%, or > 40 wt.%, or > 50 wt.%, or > 60 wt.%, or > 65 wt.%; and the optional components, including catalysts, are present in an amount of < 50 wt.%, or < 40 wt.%, < 30 wt.%, or 0-50 wt.%, or 1-50 wt.%, or 5-50 wt.%, or 5-45 wt.%, based on the total weight of the polyurethane-based adhesive composition. In embodiments, a catalyst is used in an amount of 0.1-0.5 wt.%, when the relative humidity of the curing environment is < 50%.

In embodiments for two-component polyurethane-based adhesives, the DCR can be added in either to the polyol polymer, or to the polyisocyanate, or to both. In embodiments, the DCR is added to the polyol polymer (part A), with part B comprising, or consisting essentially of isocyanate. In embodiments, part A comprises (based on the total weight of part A): polyol polymer in an amount of 10-99 wt.%, or 20-99 wt.%, 25-99 wt.%, or 30-99 wt.%, or 40-99 wt.% or 50-99 wt.%, or < 100 wt.%, or < 99 wt.%, or < 95 wt.%, or < 90 wt.%, or > 20 wt.%, or > 40 wt.%, or > 50 wt.%, or > 60 wt.%, or > 65 wt.%; DCR in an amount of 1-25 wt.%, or 5-20 wt.%, or 5-15 wt.%, or 5-10 wt.% or < 25 wt.%, or < 20 wt.%, or < 15 wt.%, or < 10 wt.%, or > 1 wt.%, or > 3 wt.%; and optional components, including catalysts, in an amount of < 90 wt.%, or < 75 wt.%, or < 50 wt.%, or < 25 wt.% or < 20 wt.%, 0-90 wt.%, or 0-50 wt.%, or 0-25 wt.%, or 1-25 wt.%, or 1-20 wt.%, based on the total weight of part A. In embodiments, part B comprises (based on the total weight of part B): polyisocyanate in an amount of 10-99 wt.%, or 20-99 wt.%, 25-99 wt.%, or 30-99 wt.%, or 40-99 wt.% or 50-99 wt.%, or < 100 wt.%, or < 99 wt.%, or < 95 wt.%, or < 90 wt.%, or > 20 wt.%, or > 40 wt.%, or > 50 wt.%, or > 60 wt.%, or > 65 wt.%; and optional components, including catalysts, in an amount of < 80 wt.%, or < 70 wt.%, or < 60 wt.%, or 0-80 wt.%, or 1-80 wt.%, or 1-70 wt.%, or 1-60 wt.%, based on the total weight of part B. In embodiments, a catalyst is added to part B in an amount of 0.1-0.5 wt.%, when the relative humidity of the curing environment is < 50%.

In embodiments, the DCR is added to the polyisocyanate (part B), with part A comprising, or consisting essentially of the polyol polymer. In embodiments, part A (based on the total weight of part A) comprises: polyol polymer in an amount of 10-100 wt.%, 10-99 wt.%, or 20-99 wt.%, 25-99 wt.%, or 30-99 wt.%, or 40-99 wt.% or 50-99 wt.%, 85-99 wt.%, or < 100 wt.%, or < 99 wt.%, or < 95 wt.%, or < 90 wt.%, or > 20 wt.%, or > 40 wt.%, or > 50 wt.%, or > 60 wt.%, or > 65 wt.%; and optional components, including catalysts, in an amount of < 90 wt.%, or < 75 wt.%, or < 50 wt.%, or < 25 wt.%, or < 20 wt.%, or < 15 wt.%, 0-90 wt.%, or 0-75 wt.%, or 0-50 wt.%, or 0-25 wt.%, or 1-25 wt.%, or 1-20 wt.%, based on the total weight of part A. In embodiments, part B (based on the total weight of part B) comprises: polyisocyanate in an amount of 10-99 wt.%, or 20-99 wt.%, 25-99 wt.%, or 30-99 wt.%, or 40-99 wt.% or 50-99 wt.%, 85-99 wt.%, or < 100 wt.%, or < 99 wt.%, or < 95 wt.%, or < 90 wt.%, or > 20 wt.%, or > 40 wt.%, or > 50 wt.%, or > 60 wt.%, or > 65 wt.%; DCR in an amount of 1-25 wt.%, or 5-20 wt.%, or 5-15 wt.%, or 5-10 wt.% or < 25 wt.%, or < 20 wt.%, or < 15 wt.%, or < 10 wt.%, or > 1 wt.%, or > 3 wt.%; and optional components, including catalysts, in an amount of < 80 wt.%, or < 70 wt.%, or < 60 wt.%, or 0-80 wt.%, or 1-80 wt.%, or 1-70 wt.%, or 1-60 wt.%, based on the total weight of part B. In embodiments, a catalyst is added to part B in an amount of 0.1-0.5 wt.%, when the relative humidity of the curing environment is < 50%.

In embodiments where DCR is added in both part A and part B, the amount of DCR to be added in each part ranges from 0.5-25 wt.%, or 1-20 wt.%, or 5-15 wt.%, or 5-10 wt.%, based on the formulations above.

In mixing parts A and B to form the polyurethane-based adhesive, the amounts of part A and part B range from 1:1 to 8:1, or 2:1 to 7:1.

SMP-based adhesive: In embodiments, for SMP-based adhesives, the DCR is present in an amount of 1-25 wt.%, or 5-20 wt.%, or 5-15 wt.%, or 5-10 wt.% or < 25 wt.%, or < 20 wt.%, or < 15 wt.%, or < 10 wt.%, or > 1 wt.%, or > 3 wt.%; the silyl modified polymer precursor is present in an amount of 20-99 wt.%, or 30-99.5 wt.%, or 40-99.5 wt.%, or 75-99 wt.%, or < 100 wt.%, or < 99 wt.%, or < 95 wt.%, or > 20 wt.%, or > 40 wt.%, or > 50 wt.%; and the optional components, including catalysts, are present in an amount of < 90 wt.%, or < 80 wt.%, or < 70 wt.%, or < 60 wt.%, or 0-90 wt.%, 1-90 wt.%, or 1-80 wt.%, or 1-70 wt.%, or 1-60 wt.%, based on the total weight of the SMP-based adhesive composition.

Method of Making: The method of combining the components is not limited, provided that conditions (temperature, humidity, etc.) do not allow premature curing to take place. For example, one-component epoxy-based adhesives may be premixed and frozen, or comprise latent hardeners that are cured at > 80°C. Acrylic-based adhesives can be exposed to UV energy to breakdown an optional photo-initiator or be stored at < 30°C to prevent decomposition and inadvertent curing prior to use. Polyurethane-based adhesives and SMP-based adhesives can be kept dry by physical or chemical drying of the starting substances, or by operating under inert gas, typically nitrogen to delay curing.

In the case of two-component compositions, a first part A of the adhesive composition comprises the polymer precursor component, e.g., epoxy or acrylic, and a separate part B of the adhesive composition comprises the curing agent component, as described above. In embodiments, for polyurethane-based two component adhesive compositions, a first part A of the adhesive composition comprises polyol, and a separate part B comprises polyisocyanate, as described above. The adhesive compositions are prepared by mixing the two parts together.

Prior to application, the components (part A and part B) are stored separately from one another and are mixed with one another only during or immediately prior to application. The components are present in a pack which is composed of two separate chambers, with the part A in one chamber and the part B in the other chamber. The components (part A and B) are introduced into the chambers of the pack and sealed.

For small applications, adhesive packaging can be any of side-by-side double cartridges or coaxial cartridges, in which two tubular chambers are arranged alongside one another or inside one another and are sealed with pistons. For larger applications, the components (parts A and B) are dispensed and stored in drums or pails for subsequent mixing in applications. Mixing is accomplished typically via static mixers or with the aid of dynamic mixers. At the mixing stage it is important to ensure that the two components are mixed as homogeneously as possible.

The structural adhesive can be cured in accordance with techniques well known in the art, e.g., heat, chemical, radiation, induction, etc. Cure time varies depending on the curing used in the adhesive composition and ranges from instantaneous (< 5 seconds) to 72 hours, or 15 seconds to 48 hours, or 30 seconds to 36 hours, or 1 second to 24 hours, or < 24 hours. Multiple curing techniques can be used for the same adhesive, for example, an adhesive can be cured at room temperature followed by a post cure, e.g., exposure to heat or radiation. In embodiments, the adhesive is partially or fully heat cured. Induction curing can be used for partial curing, followed by a second curing technique, e.g., induction cure, followed by a room temperature cure. In embodiments, the adhesive is cured using UV / photocuring in seconds to minutes after exposure to UV light / radiation.

Epoxy-based adhesives can be cured by heat and UV in the case of one-component adhesives; and by heat curing, room temperature curing, moisture curing, pressure curing, induction curing, UV curing, post curing, and combinations thereof for two-component adhesive compositions. In embodiments, the time for curing takes 1 hour to 24 hours, or 12 hours to 24 hours.

Acrylic-based adhesives can be cured by heat curing, moisture curing, induction curing, ultraviolet light curing, post curing, and combinations thereof. In embodiments, the time for curing is instantaneous (< 5 seconds) to 36 hours, or 30 seconds to 24 hours.

Polyurethane-based adhesives can be cured by moisture, room temperature, or heat, depending on whether one-component or two-component. In embodiments, the time for curing takes 1 minute to 24 hours, or 2 minutes to 16 hours.

SMP-based adhesives can be cured by moisture, or heat. In embodiments, the time for curing takes 1 minute to 24 hours, or 2 minutes to 16 hours.

### Properties of Structural Adhesive:

In embodiments, the uncured structural adhesive has a Brookfield viscosity of at least 25,000 cps, or > 50,000 cps, or > 55,000 cps, or > 60,000 cps, or 25,000-1,000,000 cps, or 50,000-750,000 cps, or 50,000-500,000 cps, or 50,000-300,000 cps at 2 rpm.

In embodiments, the structural adhesive while curing has a gel time of < 30 minutes, or < 15 minutes, or < 10 minutes, or < 8 minutes. Gel time is considered as the time following mixing when the composition is no longer stirrable by hand.

In embodiments, the structural adhesive has a cure time ranging from instantaneous (< 5 seconds) to 72 hours, or 5 seconds to 48 hours, or 10 seconds to 40 hours, or 10 seconds to 36 hours, or 1 second to 24 hours, or < 24 hours, or < 12 hours.

The structural adhesives after curing have one or more of the following mechanical properties: lap shear strength, tensile elongation and tensile strength.

In embodiments, the cured structural adhesive has a lap shear strength of at least 200 psi, or at least 300 psi, or at least 400 psi, or at least 500 psi, or 200-6,000 psi, or 300-5,000 psi, or 400-4,000 psi after curing.

In embodiments, the cured structural adhesive has a tensile elongation of at least 25%, or at least 30%, or at least 35%, or at least 50%, or at least 75%, or at least 90%, or 25-200%, or 30-150%, or 30-99%, after curing.

In embodiments, the cured structural adhesive has a tensile strength of at least 600 psi, or > 700 psi, or > 800 psi, or < 10,000 psi after curing.

In embodiments of epoxy-based structural adhesives, the uncured epoxy-based structural adhesives have a Brookfield viscosity of at least 50,000 cps, or preferably at least 55,000 cps, or more preferably at least 60,000 cps at 2 rpm and 23°C; or a Brookfield viscosity of at least 700 cps, or preferably > 850 cps, or more preferably > 1000 cps at 20 rpm and 23°C; during curing, the structural adhesives have a gel time of < 15 minutes, or preferably < 10 minutes; or more preferably < 8 minutes; and after curing, the cured structural adhesives have at least one of: a lap shear strength of at least 200 psi, or preferably at least 400 psi, or more preferably at least 500 psi, or < 6,000 psi, or 200-6,000 psi, measured according to ASTM D3163; a tensile elongation of at least 50%, or preferably > 75%, or preferably > 90%, or < 99%, measured according to ASTM D412; a tensile strength of at least 600 psi, or preferably at least 700 psi, or more preferably at least 800 psi, or < 10,000 psi measured according to ASTM D412.

In embodiments of acrylic-based structural adhesives, the uncured acrylic-based structural adhesives have a Brookfield viscosity of at least 50,000 cps, or preferably at least 75,000 cps, or more preferably at least 100,000 cps at 2 rpm and 23°C; during curing, the structural adhesives have a gel time of < 15 minutes, or preferably < 10 minutes; or more preferably < 8 minutes; and after curing, the cured structural adhesives have at least one of: a lap shear strength of at least 300 psi, or preferably at least 400 psi, or more preferably at least 500 psi, or < 6,000 psi, or 200-6,000 psi, measured according to ASTM D3163; a tensile elongation of at least 25%, or preferably at least 30%, or more preferably at least 50%, or < 99%,measured according to ASTM D412; a tensile strength of at least 1,000 psi, or preferably at least 1,500 psi, or more preferably 2,000 psi, or < 10,000 psi, measured according to ASTM D412.

In embodiments of polyurethane-based structural adhesives, the polyurethane-based structural adhesives have during curing a gel time of < 15 minutes, or preferably < 10 minutes; or more preferably < 8 minutes; and after curing, the cured polyurethane-based structural adhesives have at least one of: a lap shear strength of at least 200 psi, or preferably at least 400 psi, or more preferably at least 500 psi, or < 6,000 psi, or 200-6,000 psi, measured according to ASTM D3163; a tensile elongation of at least 50%, or preferably > 75%, or more preferably > 100%, or < 200%, measured according to ASTM D412; a tensile strength of at least 600 psi, or preferably at least 700 psi, or more preferably at least 800 psi, or < 10,000 psi measured according to ASTM D412.

In embodiments of SMP-based structural adhesives, the SMP-based structural adhesives have during curing a gel time of < 15 minutes, or preferably < 10 minutes; or more preferably < 8 minutes; and after curing, the cured SMP-based structural adhesives have at least one of: a lap shear strength of at least 200 psi, or preferably at least 400 psi, or more preferably at least 500 psi, or < 6,000 psi, or 200-6,000 psi, measured according to ASTM D3163; a tensile elongation of at least 50%, or preferably > 75%, or more preferably > 100%, or < 200%, measured according to ASTM D412; a tensile strength of at least 600 psi, or preferably at least 700 psi, or more preferably at least 800 psi, or < 10,000 psi measured according to ASTM D412.

Uses of Structural Adhesive: The structural adhesive compositions may be used to supplement or eliminate a weld or mechanical fastener by applying the adhesive composition between two parts to be joined and curing the adhesive to form a bonded joint. Suitable substrates onto which the structural adhesive may be applied include metals (e.g., steel, iron, copper, aluminum, etc., including alloys thereof), carbon fiber, glass fiber, glass, epoxy fiber composites, wood, ceramics, plastic, and mixtures thereof.

The structural adhesive can be provided as a kit with one single component by itself, or a two-part (component) kit with two separate components to be mixed together for the curing process.

The structural adhesive can be applied as liquid, paste, and semi-solid or solid that can be liquefied upon heating. It can be applied as a continuous bead, in intermediate dots, stripes, diagonals or any other geometrical form that will conform to forming a useful bond. The adhesive composition can be brushed, sprayed, knifed, cartridge-applied, including dual cartridges.

The structural adhesives can be used in vehicle assembly, such as the assembly of watercraft vehicles, aircraft vehicles or motorcraft vehicles, such as cars, motor bikes or bicycles. The adhesive compositions can be used as hem-flange adhesives. In embodiments, the adhesive is used in body frame construction. The compositions may also be used as structural adhesives in architecture or as structural adhesives in household and industrial appliances.

In embodiments, a method of making a composite article comprises applying the structural adhesive to a surface and curing the structural adhesive in contact with the surface to form a composite article.

In embodiments, a method of forming a bonded joint between members comprising applying the structural adhesive to a surface of at least one of two or more members, joining the members so that the structural adhesive is sandwiched between the two or more members, and curing structural adhesive to form a bonded joint between the two or more members.

Examples: The following examples are provided to further illustrate the disclosure, with properties or measurement methods as indicated below.

DCR samples are from Kraton Corporation with properties as shown in Table 1. DCR 1 and DCR 2 have the following components: an %O2 content of 0.39% and 0.1%; % tricyclic species of 69.5% and 77.7%, and other components as identified by their molecular weights and amount: aromatics (with MW of 252) 15.7% and 14.0%; reactive double bonds (with MW of 254) 0.1% and 0.5%; aromatics (with MW of 256) 40.3% and 45.3%; cycloaliphatic (with MW of 260) 0.7% and 0.3%; and reactive double bonds (with MW of 258) 0.4% and 0.8%, respectively.

**Table 1 - DCR Samples**

| | DCR 1 | DCR 2 |
|---|---|---|
| Acid Number mg KOH/g | 7 | 2 |
| Color | - | 1 |
| Viscosity, cSt @ 40°C | 45.3 | 25.2 |
| Density, 40°C | 0.95 | 0.95 |
| Sulfur (ppm) | 274 | 66 |
| Flash Point, COC | 140 | 141 |
| Aniline Point | 14 | 13 |
| Pour Point | -14 | -26 |

| | | |
|---|---|---|
| *COC refers to using Cleveland Open Cup tester per to ASTM D92 | | |

Epoxy Resin 1 is an undiluted clear difunctional bisphenol A/epichlorohydrin derived liquid epoxy resin. Epoxy Resin 1 has a weight per epoxide of 185-195 g/eq (ASTM D1652), a viscosity at 25°C of 110-150 P (ASTM D445), a density at 25°C of 1.16 g/ml (ASTM D1475), and a vapor pressure at 25°C of 0.03 mmHg.

RA1 is a liquid rheology additive that is a solution of a modified urea, having an active substance of 52%, a density of 9.43 lbs/gal at 68°F, and a flash point of 196°F.

RA2 is a rheology additive that is a solution of amine functional oligoamides, having a density at 20°C of 0.98 g/ml, a viscosity of 20000 mPas, and a refractive index at 20°C of 1.517.

Curing Agent is a clear color liquid polymer with thiol(-SH) terminals, having a viscosity at 25°C of 13 Pas, a mercaptan content of 13 wt.%, and a color (APHA) of about 15.

Catalyst is a tertiary amine accelerator and curing agent with an amine value of 590-630 mg KOH/g, a viscosity at 25°C of 180-320 cps, a density of 8.1 lbs/gal.

Viscosity was measured by Brookfield viscometer at room temperature (23°C).

Gel time was measured by Gardner gel time tester.

Tensile strength and tensile elongation were measured per ASTM D412. The specimen configuration was measured on a dog bone shaped specimen measuring 165 mm in length, 19 mm overall width, 13 mm gage width, 50 mm gage length, 57 mm length of narrow section, 115 mm length of narrow grips, and 3.2 mm thick.

Lap shear testing of bonded rigid plastics was measured per ASTM D3163.

Lap shear testing of bonded metals was measured per ASTM D3528.

Example 1-2 part epoxy adhesive. The components of Part A and Part B, see Table 2 below, were mixed separately at room temperature, prior to mixing to together form the epoxy adhesive. To form Structural Adhesive 1, Parts A and B were mixed together in a 1:1 ratio at room temperature.

**Table 2**

| **Part A** | | **Part B** | |
|---|---|---|---|
| Component | Amount (wt.%) | Component | Amount (wt.%) |
| Epoxy Resin 1 | 85 | Curing Agent | 74.8 |
| DCR 1 | 10 | Catalyst | 10.2 |
| RA 1 | 5 | Nonylphenol | 10 |
| | | RA2 | 5 |

Structural Adhesive 1 and a comparative adhesive (details below) were used to bond an acrylic solid surface, in this case DuPont Corian, to medium density fiberboard (MDF).

The comparative adhesive (Comp Adhesive 1) is an epoxy structural adhesive utilizing benzoate ester in Part A, available as Substrate Bonder from American Acrylic Adhesives.

Both Structural Adhesive 1 and Comp Adhesive 1 were cured for seven (7) days at room temperature (23°C).

**Table 3**

| | **Comp Adhesive 1** | **Structural Adhesive 1** |
|---|---|---|
| Viscosity (2 rpm) | 66,770 cps | 68,400 cps |
| Viscosity (20 rpm) | 1,200 cps | 1,050 cps |
| Gel Time (150g) (gelation exotherm 105°F) | 6:30 | 6:30 |
| Tensile elongation | 105% +/- 7% | 99% +/-10% |
| Tensile strength | 850 psi +/- 23 psi | 876 psi +/- 19 psi |
| Lap shear strength | 450 psi +/- 20psi | 457 psi +/- 16 psi |
| Failure Mode | MDF substrate failure | MDF substrate failure |

The failure mode of the structural adhesive composition includes substrate failure and cohesive failure. Substrate failure is defined as, during the lap shear test, the substrate fractures or breaks before the bond between the structural adhesive and the substrate breaks. Cohesive failure is defined as, during the lap shear test, the structural adhesive itself ruptures, leaving adhesive residue on both substrates.

Example 2-2 part acrylic adhesive. The components of Part A and Part B, see Table 4 below, were mixed separately at room temperature, prior to mixing to together form the acrylic adhesive. To form Structural Adhesive 2, Parts A and B were mixed together in a 10:1 ratio at room temperature.

KAB564 is a methyl methacrylate, butadiene, styrene (MBS) based impact modifier with a particle size of <= 1.0% on 16 mesh, a volatile matter <= 1.5% at 105°C for 60 min, and a bulk density of >= 0.4 g/cc.

Fumed silica is a hydrophilic fumed silica with a specific surface are of 200 m²/g, and a pH value (in 4% dispersion) of about 4%.

Catalyst 2 is dimethylparatoluidine a tertiary amine catalyst.

Phosphate ester is an adhesion promoter containing mono- and di-phosphate esters of 2-hydroxyethylmethacrylate, with a flash point of 93°C, and a pH of 1.5-2.5.

Cure inhibitor is butylated hydroxytoluene.

Peroxide is a fine dispersion of dibenzoyl peroxide (50%) in creamy paste form.

**Table 4**

| **Part A** | | **Part B** | |
|---|---|---|---|
| Component | Amount (wt.%) | Component | Amount (wt.%) |
| Methyl methacrylate | 65 | Peroxide | 20 |
| Methacrylic acid | 4 | Epoxy resin | 60 |
| KAB564 | 15 | CaCO3 | 17 |
| Fumed silica | 1 | Fumed silica | 3 |
| Catalyst 2 | 1 | | |
| Phosphate ester | 1 | | |
| Cure inhibitor | 1 | | |
| Polyethylene wax | 0.5 | | |
| DCR 2 | 10 | | |

The properties of Structural Adhesive 2 are found in Table 5, below. The comparative adhesive (Comp Adhesive 2) is a two-part methacrylate adhesive available as Plexus MA 420 from ITW Performance Polymers.

Both Structural Adhesive 2 and Comp Adhesive 2 were cured for twenty-four (24) hours at room temperature (23°C).

**Table 5**

| | **Comp Adhesive 2** | **Structural Adhesive 2** |
|---|---|---|
| Viscosity (2 rpm) | 120,000 cps | 105,000 cps |
| Gel Time (30g) (gelation exotherm 105°F) | 4-6 minutes | 4-6 minutes |
| Tensile elongation | 35% +/- 10% | 49% +/- 12% |
| Tensile strength | 2,900 psi +/- 100 psi | 2,450 psi +/- 70 psi |

Structural Adhesive 2 and a comparative adhesive (details below) were used to bond aluminum to fiberglass reinforced composite ("FRP"), polycarbonate sheets, and 6061 aluminum, see Table 6 below. A metal primer was pre-applied to the aluminum panels prior to the application of Comp Adhesive 2.

DCR 1 was used as a plasticizer in Structural Adhesive 1, whereas Comp Adhesive 2 uses solid rubbers to increase elongation. DCR 2 was used in place of petroleum-based rubbers to make the product more environmentally friendly.

**Table 6: Lap shear values for structural adhesives using different substrates**

| | Example 1 | Example 2 | Example 3 |
|---|---|---|---|
| Substrates | 6061 aluminum to FRP | polycarbonate to polycarbonate | 6061 aluminum to 6061 aluminum |
| Comp Adhesive 2 | 790 psi +/- 18 psi | 530 psi +/- 10 psi | 3,105 psi +/- 100 psi |
| Structural Adhesive 2 | 750 psi +/- 20 psi | 590 psi +/- 5 psi | 2,670 psi +/- 90 psi |
| Failure Mode | FRP substrate failure | polycarbonate substrate failure | cohesive failure |

The failure mode of the structural adhesive composition includes substrate failure and cohesive failure. Substrate failure is defined as, during the lap shear test, the substrate fractures or breaks before the bond between the structural adhesive and the substrate breaks. Cohesive failure is defined as, during the lap shear test, the structural adhesive itself ruptures, leaving adhesive residue on both substrates.

Example 3-2 part polyurethane adhesive. Structural Adhesive 3 can be made by mixing together part A and part B in a 4:1 ratio, using the ingredients in Table 7.

**Table 7**

| Part A | | Part B | |
|---|---|---|---|
| Component | Amount (wt.%) | Component | Amount (wt.%) |
| polyol polyester polymer | 90 | isocyanate | 90 |
| DCR | 10 | silica | 10 |

Structural Adhesive 3 is expected to have a gel time of < 30 minutes, a tensile elongation of > 100%, and a tensile strength of > 250 psi.

Example 4- a silyl modified polymer adhesive. Structural Adhesive 4 can be made by mixing together the components listed in Table 8.

**Table 8**

| Component | Amount (wt.%) |
|---|---|
| SMP Polymer | 79.5 |
| DCR | 10 |
| silica | 10 |
| Catalyst | 0.5 |

Structural Adhesive 4 is expected to have a gel time of < 30 minutes, a tensile elongation of > 50%, and a tensile strength of > 250 psi.

Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A structural adhesive composition comprising:
10-99 wt.% of a polymer precursor selected from the group consisting of epoxy resin, acrylic polymer, polyurethane, and silyl modified polymer;
1-25 wt.% of a decarboxylated rosin acid having:
a Kb value of 25-90, measured according to ASTM D1133,
a density of 0.9 to 1.0 g/cm³ at 20°C,
a viscosity of 15 to 60 cSt at 40°C, measured according to ASTM D-445, and
an acid value of < 50 mg KOH/g, as measured according to ASTM D1240-14 (2018); and
up to 89 wt.% of an optional component selected from adhesion promoters, elastomer tougheners, corrosion inhibitors, impact modifiers, reactive liquid monomers, rheology controlling agents, pigments, colorants, antioxidants, metal salts, anti-foaming agents, dispersants, surfactants, flame retardants, cure rate regulators, accelerators, fillers, and mixtures thereof;
wherein the structural adhesive composition after curing, has at least one of:
a lap shear strength of at least 200 psi, measured according to ASTM D3163;
a tensile elongation of at least 25%, measured according to ASTM D412; and
a tensile strength of at least 600 psi, measured according to ASTM D412; and
wherein the structural adhesive composition is cured by any of moisture curing, heat curing, radiation curing, chemical curing, induction curing, post curing, or combinations thereof.

2. The structural adhesive composition of claim 1, wherein the decarboxylated rosin acid comprises one or more C=C groups, and 40 - 100 wt.% of tricyclic compounds having 18 - 20 carbon atoms.

3. The structural adhesive composition of any of the preceding claims, wherein sum of tricyclic compounds as aromatic and cycloaliphatic in the decarboxylated rosin acid is > 50 wt.%, based on total weight of the decarboxylated rosin acid.

4. The structural adhesive composition of any of the preceding claims, wherein the amount of cycloaliphatic tricyclic compounds in the decarboxylated rosin acid is > 15 wt.%, based on total weight of the decarboxylated rosin acid.

5. The structural adhesive composition of any of the preceding claims, wherein the decarboxylated rosin acid is unhydrogenated, and wherein the unhydrogenated decarboxylated rosin acid has at least one of:
a C19 species with a MW of 262 in an amount of 5-20 wt.%;
a C19 species with a MW of 260 in an amount of 5-25 wt.%;
a C19 species with a MW of 256 in an amount of 35-55 wt.%;
a C19 species with a MW of 252 in an amount of 5-20 wt.%;
a C13 species with a MW of 180 in an amount of 0-5 wt.%; and
a C13 species with a MW of 174 in an amount of 5-25 wt.%.

6. The structural adhesive composition of any of the preceding claims, wherein the structural adhesive composition, before curing, has a Brookfield viscosity of at least 25,000 cps at 2 rpm and 23°C.

7. The structural adhesive composition of any of the preceding claims, wherein the structural adhesive composition has a gel time of less than 30 minutes at 23°C.

8. The structural adhesive composition of any of claims 1-7, wherein:
the polymer precursor is an epoxy, the epoxy comprising a curable epoxy resin;
the structural adhesive composition is in the form of a two-part kit, a first part comprising the curable epoxy resin, and a second part comprising a curing agent selected from the group of ethylene diamine, diethylene diamine, diethylene triamine, triethylene tetramine, propylene diamine, tetraethylene pentamine, hexaethylene heptamine, hexamethylene diamine, 2-methyl-1,5-pentamethylene-diamine, 4,7,10-trioxatridecan-1,13-diamine, aminoethylpiperazine, and mixtures thereof;
the decarboxylated rosin acid is present in any of the first part, the second part, or both the first part and the second part; and
the structural adhesive composition is formed by mixing the first part and the second part forming a mixture.

9. The structural adhesive composition of any of claims 1-7, wherein:
the polymer precursor is an epoxy, the epoxy comprising a curable epoxy resin;
the structural adhesive composition is provided as single part, the single part comprises a mixture of:
1-25 wt.% of the decarboxylated rosin acid,
20-98 wt.% of the curable epoxy resin,
1-15 wt.% of a curing agent, and
up to 80 wt.% of the optional components.

10. The structural adhesive composition of any of claims 1-7, wherein:
the polymer precursor is an acrylic, the acrylic comprising one or more acrylate or methacrylate monomers or oligomers;
the structural adhesive composition is in the form of a two-part kit, a first part comprising the one or more acrylate or methacrylate monomers or oligomers, and a second part comprising a free-radical generator curing agent selected from the group of peroxides, hydroperoxides, peresters, organic transition metal salts, compounds comprising labile chlorine, multifunctional crosslinking monomers, and mixtures thereof;
the decarboxylated rosin acid is present in any of the first part, the second part, or both the first part and the second part; and
the structural adhesive composition is formed by mixing the first part and the second part forming a mixture.

11. The structural adhesive composition of any of claims 1-7, wherein:
the polymer precursor is an acrylic, the acrylic comprising one or more acrylate or methacrylate monomers or oligomers;
the structural adhesive composition is provided as single part, the single part comprises a mixture of:
1-25 wt.% of the decarboxylated rosin acid,
20-98 wt.% of the one or more acrylate or methacrylate monomers or oligomers,
1-10 wt.% of a curing agent, and
up to 80 wt.% of the optional components.

12. The structural adhesive composition of any of claims 1-7, wherein:
the polymer precursor is a polyurethane, the polyurethane comprising polyol polymer and isocyanate;
the structural adhesive composition is in the form of a two-part kit, a first part comprising the polyol polymer and a second part comprising the isocyanate;
the decarboxylated rosin acid is present in any of the first part, the second part, or both the first part and the second part; and
the structural adhesive composition is formed by mixing the first part and the second part forming a mixture.

13. The structural adhesive composition of any of claims 1-7, wherein:
the polymer precursor is a polyurethane, the polyurethane comprising a polyol polymer, an isocyanate, and a blocking agent;
the structural adhesive composition is provided as single part, the single part comprises a mixture of:
1-25 wt.% of the decarboxylated rosin acid,
50-99 wt.% of the polyurethane precursor, and
up to 50 wt.% of the optional components.

14. The structural adhesive composition of any of claims 1-7, wherein:
the polymer precursor is a silyl modified polymer, the silyl modified polymer comprises an organic polymer substituted with at least one silyl group;
the structural adhesive composition is in the form of a two-part kit, a first part comprising the organic polymer substituted with at least one silyl group, and a second part comprising a cross-linking catalyst;
the decarboxylated rosin acid is present in any of the first part, the second part, or both the first part and the second part; and
the structural adhesive composition is formed by mixing the first part and the second part forming a mixture.

15. The structural adhesive composition of any of claims 1-7, wherein:
the polymer precursor is a silyl modified polymer, the silyl modified polymer comprises an organic polymer substituted with at least one silyl group;
the structural adhesive composition is provided as single part, the single part comprises a mixture of:
1-25 wt.% of the decarboxylated rosin acid,
75-99 wt.% of the silyl modified polymer,
0.1-1 wt.% of a crosslinking catalyst, and
up to 80 wt.% of the optional components.
